# EUROPEAN PATENT APPLICATION

(11) **EP 1 933 202 A2**
(43) Date of publication of application: **18.06.2008**
(21) Application number: 07022591.7
(22) Date of filing: 21.11.2007
(51) Int. Cl.: G03B 21/20

(54) **Lamp module**

(30) Priority: 22.11.2006 JP 2006315094
(71) Applicant: Funai Electric Co., Ltd., Daito-shi, Osaka 574-0031 (JP)
(72) Inventor: Ochi, Masaki, Daito-shi Osaka 574-0013 (JP)
(74) Representative: Beetz & Partner

(57) **Abstract**

A lamp cover (4) includes a main plate portion (4a) which faces a right side surface of a lamp casing (2), and an upper-side plate portion (4b) and a lower-side plate portion (4c) which overlap an upper side surface and a lower side surface of the lamp casing (2) adjacent to the right side surface of the lamp casing respectively. Further, a first projection (3d) formed on a front-surface member (3) is brought into contact with an outer side of a front periphery of the main plate portion (4a), a second projection (3e) formed on the front-surface member (3) is brought into contact with an outer side of the front periphery of the upper side plate portion (4b), and the upper-side plate portion (4b) and a rear portion of an upper side surface of the lamp casing which overlaps the upper-side plate portion are fastened to each other by a screw (8).

## Description

### BACKGROUND OF THE INVENTION

### Field of the Invention

The present invention relates to a lamp module for a projector.

### Description of the Related Art

A projector is a device for performing a display by projecting an image on a screen or the like. As such a projector, a liquid crystal projector which makes use of a liquid crystal panel, a DLP (Digital Light Processing) projector which makes use of a DMD (Digital Micromirror Device) and the like have been known as typical examples. The projector requires a light source lamp which emits light as an indispensable part thereof. Such a lamp is installed in the inside of a projector body as a lamp module. When the lamp module runs out, the lamp module is exchanged with a new lamp module.

Conventionally, in the lamp module of a general type, a lamp is held in a state that the lamp is housed in a lamp casing which is a resin formed product, a sheet-metal formed product or the like (for example, see patent documents 1, 2). Here, during driving of the projector, the inside of the lamp casing assumes a high temperature due to heat generated from the lamp and hence, air is made to flow into the inside of the lamp casing so as to cool the lamp.

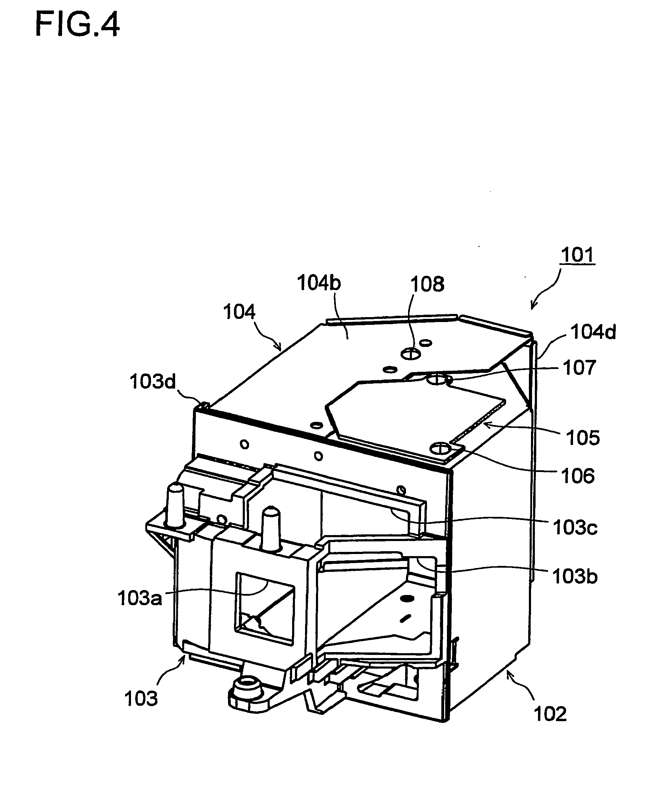

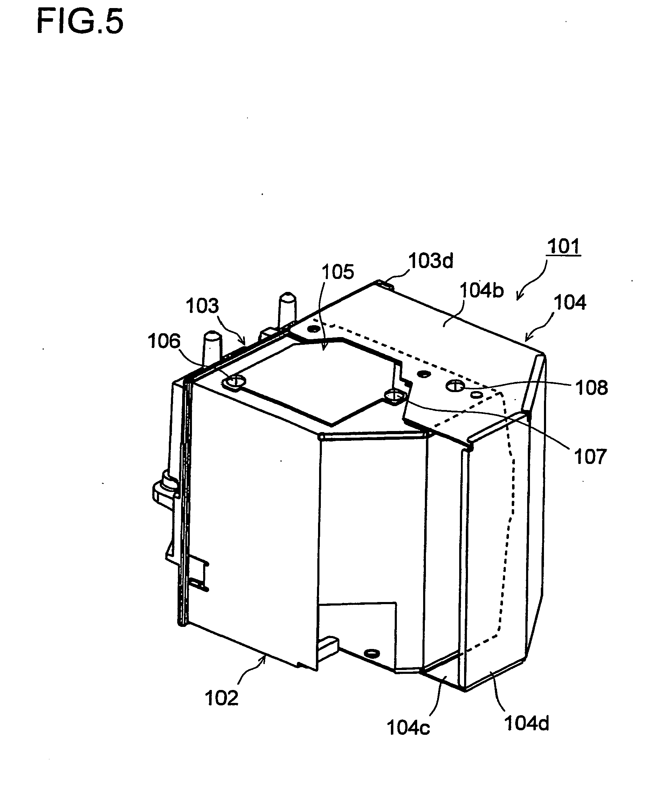

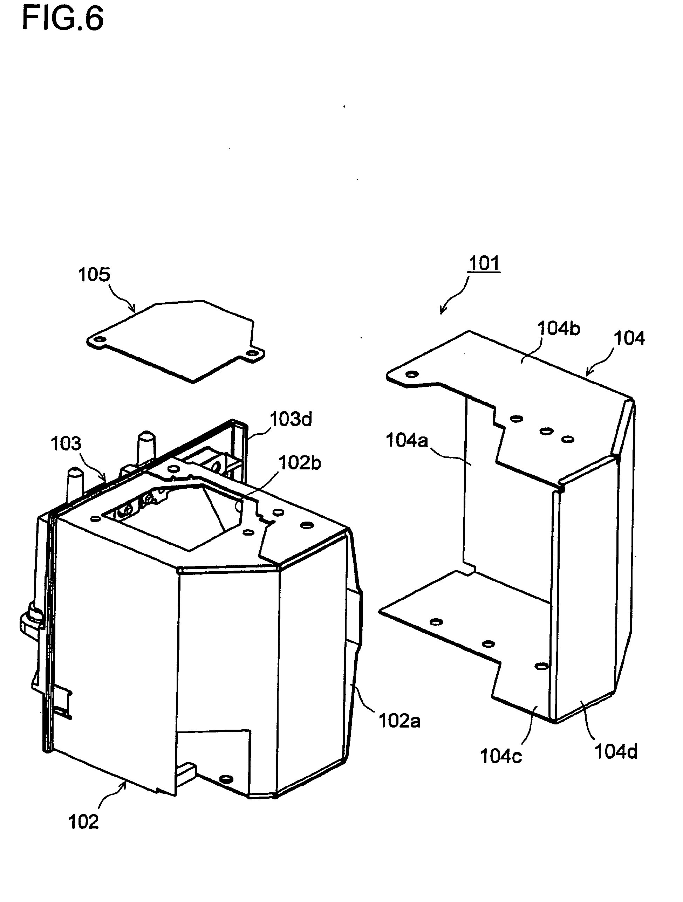

Fig. 4 to Fig. 6 show one example of a conventional lamp module 101 which includes the lamp cooling structure. The lamp module 101 includes a lamp casing 102, a front-surface member 103 which is mounted on a front surface (a left viewer's-side surface in Fig. 4, and a left depth-side surface in Fig. 5 and Fig. 6) of the lamp casing 102, and a lamp cover 104 which covers one side surface, for example, a right side surface (a left-depth-side surface in Fig. 4, and a right-depth-side surface in Fig. 5 and Fig. 6) of the lamp casing 102, for example.

The lamp casing 102 holds a light source lamp (not shown in the drawing) by housing the light source lamp therein. Here, the lamp casing 102 is formed of a sheet-metal formed product. Particularly, the lamp casing 102 is formed by laterally combining a pair of individual sheet-metal-formed parts. Further, the lamp casing 102 opens a front surface thereof and forms a gap 102a which is communicated with the inside and the outside by bulging a right-side surface thereof toward the outside in the back surface of the lamp casing 102 (see Fig. 6).

Further, the lamp casing 102 has an opening 102b in one of two, upper and lower surfaces which are arranged adjacent to the right-side surface covered with the lamp cover 104, for example, the upper surface (the upper-side surface in Fig. 4 to Fig. 6). In the vicinity of the opening 102b, that is, in the inside of the lamp casing 102 and in the vicinity of the upper surface, a connection terminal of the lamp is arranged. Accordingly, to ensure an insulation distance with respect to the connection terminal in view of requirements for safety standard, the opening 102b is formed. The opening 102b is covered with an insulation plate 105. The insulation plate 105 and the upper surface of the lamp casing 102 in which the opening 102b is formed are fastened to each other using a screw 106 which is positioned at a left end of a front portion of the insulation plate 105 and a screw 107 which is positioned at a rear portion of the insulation plate 105.

The front-surface member 103 has a substantially rectangular frame shape. A radiation opening 103a for light emitted from the light source lamp is formed in an approximately frame-like center portion of the front-surface member 103 in a state that the radiation opening 103a projects slightly frontwardly. The front-surface member 103 is a metal injection molded product. Further, behind the front-surface member 103, the lamp casing 102 is arranged in a leftwardly offset manner, and the front-surface member 103 and the lamp casing 102 are fastened to each other using screws (not shown in the drawings). Further, in the front-surface member 103, on the respective left and upper sides of the radiation opening 103a, a first ventilation port 103b and a second ventilation port 103c for introducing air into the inside of the lamp casing 102 are formed.

The lamp cover 104 is a metal-sheet formed product. Here, the lamp cover 104 includes a main plate portion 104a which faces the right-side surface of the lamp casing 102 with a predetermined distance therebetween, and an upper-side plate portion 104b and a lower-side plate portion 104c which respectively overlap two side surfaces which are arranged adjacent to the right-side surface of the lamp casing 102, that is, upper and lower side surfaces of the lamp casing 102. Rear portions of the main plate portion 104a, the upper-side plate portion 104b and the lower-side plate portion 104c are closed by a back plate portion 104d. Further, a predetermined distance is defined between the back plate portion 104d and a rear surface of the lamp casing 102. As a matter of course, the upper-side plate portion 104b of the lamp cover 104 which is positioned above the upper-side surface of the lamp casing 102 on which the insulation plate 105 is mounted overlaps the lamp casing 102 along a right periphery of the upper-side surface of the lamp casing 102 so as to prevent the upper side-plate portion 104b of the lamp cover 104 from overlapping the insulation plate 105.

Further, on a back surface of the front-surface member 103, a projection 103d which extends along the right side periphery of the front-surface member 103 and projects rearwardly is formed. Then, the lamp casing 102 which mounts the front-surface member 103 thereon and the lamp cover 104 are temporarily assembled in such a manner that while bringing the main plate portion 104a, the upper-side plate portion 104b and the lower-side plate portion 104c of the lamp cover 104 into contact with the back surface of the front-surface member 103, the outer side of a front periphery of the main plate portion 104a is applied to the projection 103d of the front-surface member 103. Then, the upper-side plate portion 104b and the rear portion of the upper-side surface of the lamp casing 102 which overlaps the upper-side plate portion 104b are fastened to each other using a screw 108. Further, another lower-side plate portion 104c of the lamp cover 104 and a rear portion of the lower-side surface of the lamp casing 102 which overlaps another lower-side plate portion 104c are fastened to each other using a screw not shown in the drawing. Due to the above-mentioned fastening, the lamp cover 104 is mounted on the lamp casing 102.

In such a lamp module 101, air which is sucked into the inside of the projector body from the outside during driving of the projector is introduced into the inside of the lamp casing 102 through the first ventilation port 103b and the second ventilation port 103c formed in the front-surface member 103 due to a fan, a blower or the like. The introduced air flows around the lamp, and is led to the back plate portion 104d of the lamp cover 104 through the gap 102a formed in the rear surface of the lamp casing 102. Along with such an air flow, air flows from the front side to the rear side between the right-side surface of the lamp casing 102 and the main plate portion 104a of the lamp cover 104, and is led to a space defined between the rear surface of the lamp casing 102 and the back plate portion 104d of the lamp cover 104. In such a process, air deprives heat from the lamp and the lamp casing 102 and generates hot air. Then, the hot air which is led to a space defined between the rear surface of the lamp casing 102 and the back plate portion 104d of the lamp cover 104 is discharged to the outside by a fan or the like. The lamp is cooled in this manner.
Patent Document 1: JP-A-2005-208410
Patent Document 2: JP-A-8-262573

Here, in the lamp module 101, the lamp cover 104 is a metal-sheet formed product and hence, the lamp cover 104 per se is liable to be easily warped or deformed. Accordingly, for example, when the upper-side plate portion 104b of the lamp cover 104 which overlaps the upper-side surface of the lamp casing 102 is warped, a front portion of the upper-side plate portion 104b is not constrained at all. Accordingly, the upper-side plate portion 104b floats from the upper-side surface of the lamp casing 102 with the rear portion thereof fastened by the screw 108 as a fulcrum. As a result, a gap is formed between the front portion of the upper-side plate portion 104b of the lamp cover 104 and the upper-side surface of the lamp casing 102. In such a case, hot air which flows from the front side to the rear side between the right-side surface of the lamp casing 102 and the main plate portion 104a of the lamp cover 104 leaks through the gap inadvertently without passing through an expected path. As a result, parts arranged in the vicinity of the gap are ill-affected attributed to the leaked air.

As an example of the part which is ill-affected, a temperature sensor which performs an emergent stop of the projector in response to the excessive temperature elevation of the lamp module 101 is named. The temperature sensor is originally configured to detect a temperature of heat transferred from the lamp casing 102, the lamp cover 104 and the like. However, when the temperature sensor is arranged in the vicinity of the gap through which air leaks, the temperature sensor directly detects a hot air temperature which is considerably higher than the heat transfer temperature from the lamp casing 102, the lamp cover 104 and the like. Accordingly, there arises a drawback that the emergent stop of the projector occurs frequently.

Such a drawback also arises in the same manner when the lower-side plate portion 104c of the lamp cover 104 which overlaps the lower-side surface of the lamp casing 102 is warped.

### SUMMARY OF THE INVENTION

The present invention has been made to overcome the above-mentioned drawbacks and it is an object of the present invention to provide a lamp module which can prevent inadvertent leaking of hot air generated by cooling a lamp.

A lamp module includes: a light source lamp; a lamp casing which houses the light source lamp therein; a lamp cover which includes a main plate portion which faces one side surface of the lamp casing and side-plate portions which respectively overlap two side surfaces of the lamp casing adjacent to one side surface of the lamp casing, and covers one side surface of the lamp casing; a front-surface member which includes a first projection which is brought into contact with an outer side of a front periphery of the main plate portion of the lamp cover, a second projection which is brought into contact with an outer side of a front periphery of at least one side plate portion of the lamp cover, and a radiation opening through which light from the light source lamp is radiated, and is mounted on a front surface of the lamp casing; a first screw which fastens the side plate portions of the lamp cover and rear portions of respective side surfaces of the lamp casing which are covered with the side plate portions in a state that the first projection of the front-surface member and the outer side of the front periphery of the main plate portion of the lamp cover are brought into contact with each other and, at the same time, the second projection of the front-surface member and the outer side of the front periphery of at least one side plate portion of the lamp cover are brought into contact with each other.

The above-mentioned and other objects and technical features of the present invention will become more apparent by reference to the following description with respect to preferred embodiments and attached drawings.

### DESCRIPTION OF THE DRAWINGS

Fig. 1 is a perspective view showing an appearance of a lamp module as viewed from a front side;
Fig. 2 is a perspective view showing an appearance of the lamp module as viewed from a rear side;
Fig. 3 is a perspective view showing an appearance of the lamp module as viewed from the rear side in an exploded manner;
Fig. 4 is a perspective view showing an appearance of a conventional lamp module as viewed from a front side;
Fig. 5 is a perspective view showing an appearance of the conventional lamp module as viewed from a rear side; and
Fig. 6 is a perspective view showing an appearance of the conventional lamp module as viewed from the rear side in an exploded manner.

### DESCRIPTION OF THE PREFERRED EMBODIMENTS

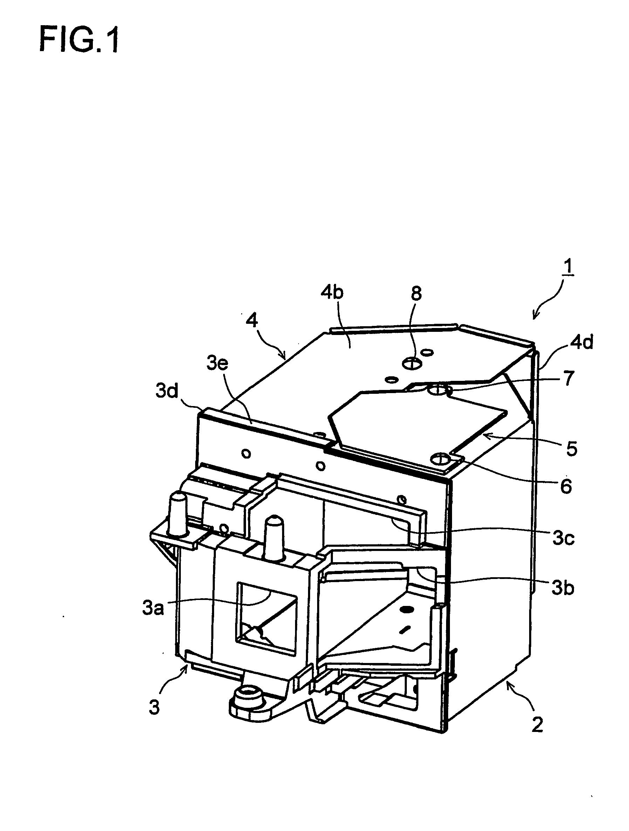

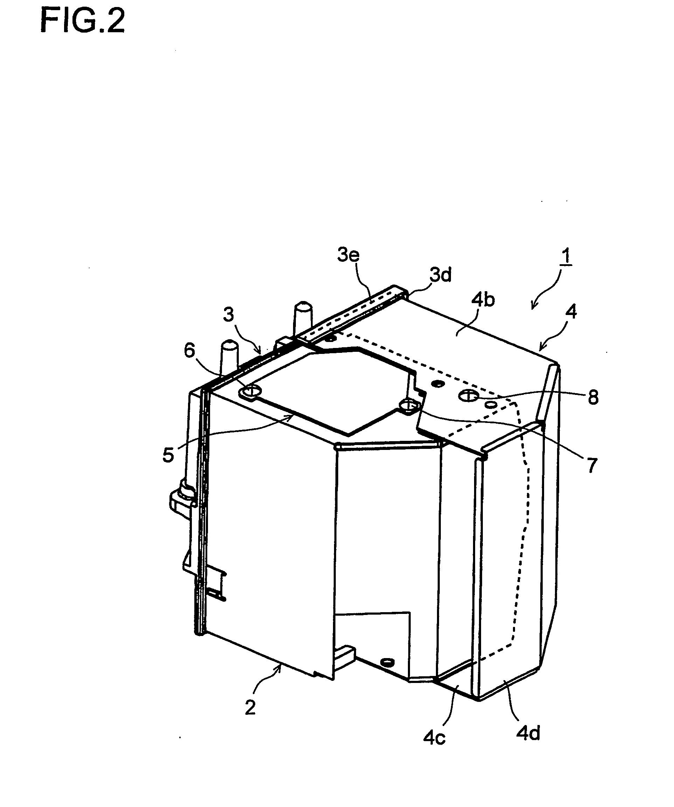

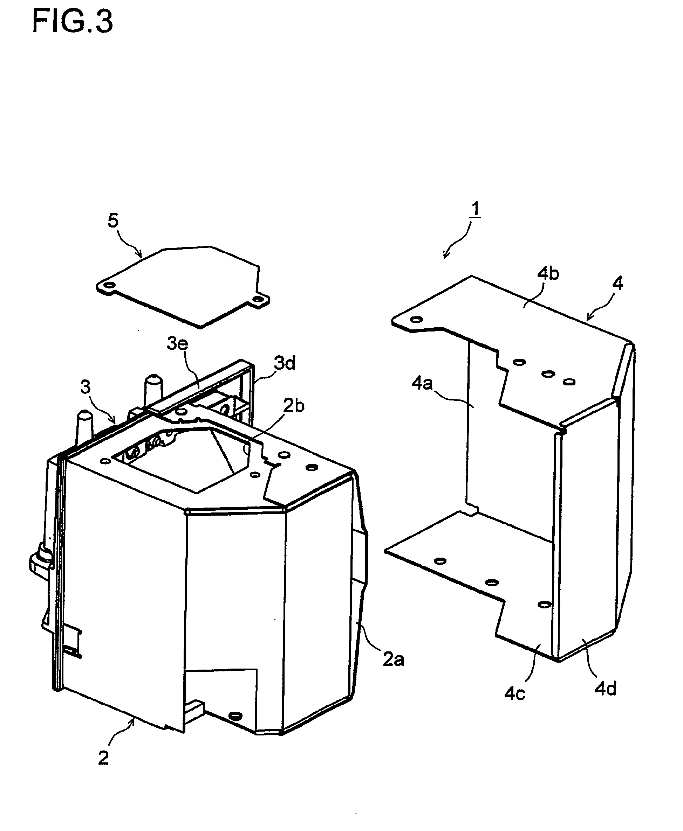

One embodiment of a lamp module is explained in detail hereinafter in conjunction with drawings. Fig. 1 is a perspective view showing an appearance of the lamp module of this embodiment as viewed from a front side of the lamp module. Fig. 2 is a perspective view showing the appearance of the lamp module as viewed from a rear side. Fig. 3 is perspective view showing the appearance of the lamp module as viewed from the rear side in an exploded manner.

As shown in Fig. 1 to Fig. 3, the lamp module 1 includes a lamp casing 2, a front-surface member 3 which is mounted on a front surface (a left viewer's-side surface in Fig. 1, and a left depth-side surface in Fig. 2 and Fig. 3) of the lamp casing 2, and a lamp cover 4 which covers one side surface, for example, a right side surface (a left-depth-side surface in Fig. 1, and a right-depth-side surface in Fig. 2 and Fig. 3) of the lamp casing 2.

The lamp casing 2 holds a light source lamp not shown in the drawing by housing the light source lamp therein. Here, the lamp casing 2 is formed of a metal sheet such as a bent aluminum plate (that is, the lamp casing 2 is formed of a sheet-metal formed product). Particularly, the lamp casing 2 is formed by laterally combining a pair of individual sheet-metal-formed parts. Further, the lamp casing 2 opens a front surface thereof and forms a gap 2a which is communicated with the inside and the outside by bulging a right-side surface thereof toward the outside in the back surface of the lamp casing 2 (see Fig. 3).

Further, the lamp casing 2 has an opening 2b in one of two, upper and lower surfaces which are arranged adjacent to the right-side surface covered with the lamp cover 4, for example, the upper surface (the upper-side surface in Fig. 1 to Fig. 3). In the vicinity of the opening 2b, that is, in the inside of the lamp casing 2 and in the vicinity of the upper surface, a connection terminal of the lamp is arranged. Accordingly, to ensure an insulation distance with respect to the connection terminal in view of requirements for safety standard, the opening 2b is formed. The opening 2b is covered with an insulation plate 5 made of a material such as liquid crystal polymer (LCP). The insulation plate 5 and the upper surface of the lamp casing 2 in which the opening 2b is formed are fastened to each other using a screw (second screw) 6 positioned at a left end of a front portion of the insulation plate 5 and a screw (second screw) 7 which is positioned at a rear portion of the insulation plate 5.

The front-surface member 3 has a substantially rectangular frame shape. A radiation opening 3a for light emitted from the light source lamp is formed in an approximately frame-like center portion of the front-surface member 3 in a state that the radiation opening 3a projects slightly frontwardly. The front-surface member 3 is a metal injection molded product made of aluminum or the like. Further, behind the front-surface member 3, the lamp casing 2 is arranged in a leftwardly offset manner, and the front-surface member 3 and the lamp casing 2 are fastened to each other using screws (not shown in the drawings). Further, in the front-surface member 3, on the respective left and upper sides of the radiation opening 3a, a first ventilation port 3b and a second ventilation port 3c for introducing air into the inside of the lamp casing 2 are formed.

The lamp cover 4 is formed of a metal sheet such as a bent aluminum sheet (that is, the lamp cover 4 being formed of a metal-sheet formed product). Here, the lamp cover 4 includes a main plate portion 4a which faces the right-side surface of the lamp casing 2 with a predetermined distance therebetween, and an upper-side plate portion 4b and a lower-side plate portion 4c which respectively overlap two side surfaces which are arranged adjacent to the right-side surface of the lamp casing 2, that is, upper and lower side surfaces of the lamp casing 2. Rear portions of the main plate portion 4a, the upper-side plate portion 4b and the lower-side plate portion 4c are closed by a back plate portion 4d. Further, a predetermined distance is also defined between the back plate portion 4d and a rear surface of the lamp casing 2. As a matter of course, the upper-side plate portion 4b of the lamp cover 4 which is positioned above the upper-side surface of the lamp casing 2 on which the insulation plate 5 is mounted overlaps the lamp casing 2 along a right periphery of the upper-side surface of the lamp casing 2 so as to prevent the lamp cover 4 from overlapping the insulation plate 5.

Further, on a back surface of the front-surface member 3, a first projection 3d which extends along the right side periphery of the back surface and projects rearwardly is formed. Further, on the back surface of the front-surface member 3, a second projection 3e which, using an upper end portion of the first projection 3d as a starting point, extends along an upper-side periphery of the back surface and projects rearwardly is formed. Here, although not shown in the drawing, further, on the back surface of the front-surface member 3, a second projection which, using a lower end portion of the first projection 3d as a starting point, extends along a lower-side periphery of the back surface and projects rearwardly is formed.

Then, the lamp casing 2 which mounts the front-surface member 3 thereon and the lamp cover 4 are temporarily assembled in such a manner that while bringing the main plate portion 4a, the upper-side plate portion 4b and the lower-side plate portion 4c of the lamp cover 4 into contact with the back surface of the front-surface member 3, the outer side of a front periphery of the main plate portion 4a is applied to the first projection 3d of the front-surface member 3, the outer side of a front periphery of the upper-side plate portion 4b is applied to the second projection 3e of the front-surface member 3, and the outer side of a front periphery of the lower-side plate portion 4c is applied to the second projection (not shown in the drawing) of the front-surface member 3. Then, the upper-side plate portion 4b of the lamp cover 4 and the rear portion of the upper-side surface of the lamp casing 2 which overlaps the upper-side plate portion 4b are fastened to each other using the screw (first screw) 8. Further, the lower-side plate portion 4c of the lamp cover 4 and a rear portion of the lower-side surface of the lamp casing 2 which overlaps lower-side plate portion 4c are fastened to each other using a screw not shown in the drawing. Due to the above-mentioned fastening, the lamp cover 4 is mounted on the lamp casing 2.

Due to such a constitution, even when the upper-side plate portion 4b of the lamp cover 4 which overlaps the upper side surface of the lamp casing 2, to be more specific, the front periphery of the upper-side plate portion 4b attempts to move toward the outside, such movement is restricted by the second projection 3e of the front-surface member 3. Further, the upper-side plate portion 4b of the lamp cover 4 and the rear portion of the upper side surface of the lamp casing 2 which overlaps the upper-side plate portion 4b are fastened to each other by the screws 8. Accordingly, even when the upper-side plate portion 4b of the lamp cover 4 attempts to warp from the upper-side surface of the lamp casing 2, the upper-side plate portion 4b cannot float. As a result, a close contact state between the upper-side plate portion 4b of lamp cover 4 and the upper side surface of the lamp casing 2 is maintained. On the other hand, the lower-side plate portion 4c of lamp cover 4 and the lower side surface of the lamp casing 2 are also brought into a close contact state in the same manner.

Further, in such a lamp module 1, air which is sucked into the inside of the projector body from the outside during driving of the projector is introduced into the inside of the lamp casing 2 through the first ventilation port 3b and the second ventilation port 3c formed in the front-surface member 3 due to a fan, a blower or the like. The introduced air flows around the lamp, and is led to the back plate portion 4d of the lamp cover 4 through the gap 2a formed in the rear surface of the lamp casing 2. Along with such an air flow, air flows from the front side to the rear side between the right-side surface of the lamp casing 2 and the main plate portion 4a of the lamp cover 4, and is led to a space defined between the rear surface of the lamp casing 2 and the back plate portion 4d of the lamp cover 4. In such a process, air deprives heat from the lamp and the lamp casing 2 and generates hot air. Then, the hot air which is led to a space defined between the rear surface of the lamp casing 2 and the back plate portion 4d of the lamp cover 4 is discharged to the outside by a fan or the like. The lamp is cooled in this manner.

In such a case, in the lamp module 1, the second projection 3e of the front-surface member 3 restricts the movement of the front periphery of the upper-side plate portion 4b of the lamp cover 4 toward the outside. Further, attributed to the fastening of the upper-side plate portion 4b and the rear portion of the upper side surface of the lamp casing 2 which overlaps the upper-side plate portion 4b by the screws 8, the upper-side plate portion 4b of the lamp cover 4 and the upper side surface of the lamp casing 2 are brought into close contact with each other. Accordingly, hot air which flows from the front side to the rear side between the right side surface of the lamp casing 2 and the main plate portion 4a of the lamp cover 4 does not leak inadvertently and is discharged by way of an expected path. That is, it is possible to prevent inadvertent leaking of hot air generated by cooling the lamp. Here, the same goes for the contact state between the lower-side plate portion 4c of the lamp cover 4 and the lower-side surface of the lamp casing 2. Accordingly, parts arranged in the vicinity of the lamp module 1 (to be more specific, in the vicinity of the front-surface member 3) are not ill-affected even when the inadvertent leaking of hot air occurs.

The present invention is not limited to the above-mentioned embodiment, and various modifications are conceivable without departing from the gist of the present invention. For example, in the above-mentioned embodiment, both of the front periphery of the upper-side plate portion 4b and the front periphery of the lower-side plate portion 4c in the lamp cover 4 are applied to the second projection 3e formed on the front-surface member 3. The present invention, however, is not limited to such constitution. When there are no parts which are liable to be easily ill-affected by heat in the vicinity of the front-face member 3, it is not always necessary to apply the second projections 3e to the front periphery of the upper-side plate portion 4b and the front periphery of the lower-side plate portion 4c. Further, when the safety standard on insulation is originally satisfied, it is unnecessary to form the opening portion 2b in the upper-side plate portion 4b of the lamp cover 4 and, at the same time, the insulation plate 5 becomes unnecessary.

Further, the lamp casing 2, the front-surface member 3 and the like may be formed of an injection molded product made of a hard resin. It is a matter of course that when the lamp casing 2 is made of an insulating resin, it is unnecessary to form the opening 2b and the insulation plate 5. Further, the above-mentioned lamp module 1 is effectively applicable to various projectors.

Here, the lamp module 1 which has been explained heretofore may be also expressed as follows.

The lamp module includes the light source lamp, the lamp casing, the lamp cover, the front-surface member and the first screw.

The light source lamp emits light, and the lamp casing houses the light-source lamp. The lamp cover includes the main plate portion which faces one side surface of the lamp casing, and the side plate portions which respectively overlap two side surfaces of the lamp casing adjacent to one side surface of the lamp casing, wherein the lamp cover covers one side surface of the lamp casing.

The front-surface member includes the first projection which is brought into contact with the outer side of a front periphery of the main plate portion of the lamp cover, a second projection which is brought into contact with the outer side of the front periphery of at least one side plate portion of the lamp cover, and the radiation opening through which light from the light source lamp is radiated, and is mounted on the front surface of the lamp casing.

The first screws fasten the side plate portions of the lamp cover and rear portions of respective side surfaces of the lamp casing which are covered with the side plate portions in a state that the first projection of the front-surface member and the outer side of the front periphery of the main plate portion of the lamp cover are brought into contact with each other and, at the same time, the second projection of the front-surface member and the outer side of the front periphery of at least one side plate portion of the lamp cover are brought into contact with each other.

That is, the lamp module includes the lamp casing which houses the light source lamp therein, the lamp cover which includes a main plate portion which faces one side surface of the lamp casing and side-plate portions which respectively overlap two side surfaces of the lamp casing adjacent to one side surface of the lamp casing, and covers one side surface of the lamp casing, and the front-surface member which includes the first projection brought into contact with the outer side of the front periphery of the main plate portion of the lamp cover, and a radiation opening through which light from the light source lamp is radiated, and is mounted on a front surface of the lamp casing. To be more specific, the front-surface member further includes a second projection which is brought into contact with an outer side of a front periphery of at least one side plate portion of the lamp cover.

Further, in this lamp module, the side plate portions and the rear portions of the side surfaces of the lamp casing which overlap the side plate portions are fastened to each other by the first screws in a state that the first projection formed on the front-surface member is applied to the outer side of the front periphery of the main plate portion and, at the same time, the second projection formed on the front-surface member is applied to the outer side of the front periphery of at least one of side plate portions.

According to the lamp module having the above-mentioned constitution, while restricting the movement of the front periphery of the lamp cover toward the outside by the second projection formed on the front-surface member, it is possible to fasten the side plate portions of the lamp cover and the rear portions of the respective side surfaces of the lamp casing covered with the side plate portions by the first screw. Accordingly, the side plate portions of the lamp cover and the side surfaces of the lamp casing are brought into a close contact state and hence, hot air which flows in the inside of the lamp casing does not flow inadvertently and is discharged by way of the expected path. That is, according to the lamp module of the present invention, it is possible to prevent the inadvertent leaking of hot air generated by cooling the lamp.

Here, the lamp cover may preferably be formed of a bent metal sheet. Further, the front-surface member may preferably be formed of a metal injection molded product.

Further, the lamp casing may preferably be formed of a bent metal sheet. However, in view of requirements for safety standard on insulation, a distance between a connection terminal of a lamp and a lamp casing, that is, an insulation distance should be ensured. Accordingly, when the lamp casing is made of metal, it is preferable that an opening is formed in at least one side surface of the lamp casing, and the lamp module includes an insulation plate which covers the opening, and the second screw which fasten the insulation plate covering the opening and the side surface of the lamp casing in which the opening is formed. To be more specific, it is preferable that the second screw is arranged at a front portion and a rear portion of the insulation plate.

The specific embodiment, modifications and the like which have been explained heretofore are provided exclusively for clarifying the technical contents of the present invention. Accordingly, the present invention should not be construed narrowly by limiting the present invention to the specific examples and the present invention can be exercised in various forms within the scope of attached claims.

## Claims

1. A lamp module (1) comprising:
a light source lamp;
a lamp casing (2) which houses the light source lamp therein;
a lamp cover (4) which includes a main plate portion (4a) which faces one side surface of the lamp casing (2) and side-plate portions (4b, 4c) which respectively overlap two side surfaces of the lamp casing (2) adjacent to one side surface of the lamp casing (2), and covers one side surface of the lamp casing (2) ; and
a front-surface member(3) which includes a first projection (3d) which is brought into contact with an outer side of a front periphery of the main plate portion (4a) of the lamp cover (4), and a radiation opening(3a) through which light from the light source lamp is radiated, and is mounted on a front surface of the lamp casing (2),
**characterized in that**
the front-surface member (3) includes a second projection (3e) which is brought into contact with an outer side of a front periphery of at least one side plate portion (4b, 4c) of the lamp cover (4), and
in a state that the first projection (3d) formed on the front-surface member (3) is brought into contact with the outer side of the front periphery of the main plate portion (4a) and, at the same time, the second projection (3e) formed on the front-surface member (3) is brought into contact with the outer side of the front periphery of at least one side plate portion (4b, 4c),
the side plate portions (4b, 4c) and rear portions of the side surfaces of the lamp casing (2) which overlaps the side plate portions (4b, 4c) are fastened by a first screw (8).

2. A lamp module (1) according to claim 1, wherein the lamp cover (4) is formed of a bent metal sheet.

3. A lamp module (1) according to claim 1 or claim 2, wherein the front-surface member (3) is a metal injection molded product.

4. A lamp module (1) according to any one of claim 1 to claim 3, wherein the lamp casing (2) is formed of a bent metal sheet.

5. A lamp module (1) according to claim 4, wherein an opening (2b) is formed in at least one side surface of the lamp casing (2), and the lamp module further includes an insulation plate (5) which covers the opening (2b), and a second screw (6, 7) which fastens the insulation plate (5) covering the opening (2b) and the side surface of the lamp casing (2) in which the opening is formed.

6. A lamp module (1) according to claim 5, wherein the second screws (6, 7) are positioned at a front portion and a rear portion of the insulation plate (5).
